# EUROPÄISCHE PATENTSCHRIFT

(11) **EP 2 304 830 B1**
(45) Veröffentlichungstag und Bekanntmachung des Hinweises auf die Patenterteilung: **16.01.2013**
(21) Anmeldenummer: 09765640.9
(22) Anmeldetag: 19.06.2009
(51) Int. Cl.: H01M 8/02, H01M 8/04, H01M 8/10

(54) **BRENNSTOFFZELLE UMFASSEND EINE GASDIFFUSIONSSCHICHT**
FUEL CELL COMPRISING A GAS DIFFUSION LAYER
PILE A COMBUSTIBLE COMPRENANT UNE COUCHE DE DIFFUSION GAZEUSE

(30) Priorität: 20.06.2008 DE 102008029099
(43) Veröffentlichungstag der Anmeldung: 06.04.2011
(73) Patentinhaber: SGL Carbon SE, 65201 Wiesbaden (DE)
(72) Erfinder: WILDE, Peter, 86405 Meitingen (DE); SCHWEISS, Rüdiger-Bernd, 86156 Augsburg (DE)
(86) Internationale Anmeldenummer: PCT/EP2009/004460
(87) Internationale Veröffentlichungsnummer: WO 2009/153060

(56) Entgegenhaltungen:
- WO-A-2006/069249
- DE-A1- 10 048 182
- US-A1- 2003 211 380
- US-A1- 2007 099 060

## Beschreibung

Die Erfindung betrifft eine Brennstoffzell umfassend eine auf Carbonfasern basierte Gasdiffusionsschicht (Gas Diffusion Layer - GDL), die eine strukturierte Hydrophilie besitzt.

Brennstoffzellen sind hoch effiziente Energiequellen, in denen Brennstoff (typischerweise Wasserstoff reiche Gase) und ein Oxidationsmittel (typischerweise Luftsauerstoff) an Katalysatorschichten auf den beiden Hauptseiten einer PEM zu Wasser elektrochemisch umgesetzt werden. Durch die elektrochemische Reaktion wird elektrische Energie erzeugt und die Reaktanten reagieren unter Bildung von Wasser. Die PEM übernimmt dabei den Protonentransport zwischen den Halbzellen, wobei die Elektronen über die Elektroden und einen externen Stromkreis zur Verrichtung von elektrischer Arbeit genutzt werden. Hauptproblem dieser Art von Brennstoffzellen ist die Balance zwischen dem notwendigen Feuchthalten der Membran und der angrenzenden Katalysatorschicht sowie dem Abtransport des gebildeten Wassers, welches sonst die Poren der GDL füllt, den Gastransport behindert sowie die Leistungsabgabe vermindert. Das Feuchtigkeitsniveau kann durch eine Reihe von Faktoren beeinflusst und kontrolliert werden. Befeuchtung des anodischen und kathodischen Reaktionsgases wird oft benutzt, um das notwendige Feuchtigkeitsniveau einzustellen. Die Arbeitsbedingungen (Zelltemperatur, Gasdruck und die Gasstöchiometrie) sind weitere Einflussgrößen, die den Wassergehalt der Membran und der GDL beeinflussen. Letztlich hat auch der Leistungsbereich, in dem die Brennstoffzelle arbeitet einen signifikanten Einfluss auf die Balance der Wassermenge in der Zelle. Der Betrieb bei hohen Stromdichten führt zur Erzeugung einer großen Wassermenge, die beherrscht und so geführt werden muss, dass das Optimum in zuverlässiger- und störungsfreier Weise erzielt wird.

Aus dem Dokument DE 102 60 501 A1 ist eine Gasdiffusionselektrode mit einer Schicht zur Steuerung der Querdiffusion von Wasser bekannt. Dabei wird eine Wasserquerdiffusionsschicht aus hydrophilen Fasern, insbesondere hydrophilen Carbonfasern, zwischen der mikroporösen GDL und der mikroporösen GDL der Gesdiffusionselektrode vorgesehen.
Aus dem Dokument DE 100 48 182 A1 ist eine Verbundanordnung zur Gasverteilung bei Brennstoffzellen bekannt. Dabei ist eine mehrlagige Gasverteilungsanordnung zur Verwendung mit einem Membranelektrodenaufbau einer PEM-Brennstoffzelle vorgesehen.
Aus dem Dokument WO 2007/139940 A2 ist eine Wärme- und Wassermanagement-Vorrichtung für PEM-Brennstoffzellen bekannt. Diese besteht aus einem thermischen und elektrisch leitfähigen, hydrophilen Wärme- und Wassertransportelement, welches sich vom inneren der Zelle zum äußeren der Zelle erstreckt und zwischen der GDL und dem Stromableiter angeordnet ist. Das Transportelement besteht aus Bornitrid, Aluminiumnitrid, Kupfer-, Aluminium-, Nickel-Legierungen, Graphit, expandierten Graphit, Graphittuch, Graphitpapier, Aluminiumschaum, Edelstahlschaum, Nickelschaum, Polyvinylalkoholschaum, Glasmikrofasern, Wolltuch, Baumwollpapier, Baumwolltuch, Polyurethanschaum, Zelluloseacetat, Polyvinylpyrrolidon oder Polyacrylamid.
Die Erfindung hat sich die Aufgabe gestellt, eine Brennstoffzelle umfassend eine GDL anzugeben, die durch ihre Gestaltung ein effektives Wassermanagement gewährleistet und damit die Brennstoffzelle auf bei dauerhaft hoher Leistungsabgabe in einfacher Weise gesteuert und betrieben werden kann.
Erfindungsgemäß wird die Aufgabe der gattungsgemäß angegebenen Brennstoffzelle umfassend eine GDL mit den Merkmalen gemäß Anspruch 1 gelöst. Weitere vorteilhafte Ausgestaltungen sind in den Ansprüchen 2 bis 10 dargelegt.

In eine GDL werden lateral vorgegebene Pfade eingebracht, an denen sich flüssiges Wasser ansammeln soil, um entlang dieser Pfade transportiert werden zu können. Die Bereiche an den hydrophilen Dochten sollen gezielt flüssiges Wasser abziehen, um die unmittelbar benachbarten Poren sicher freizuhalten für Gastransport.
Diese Pfade können eingebracht werden durch
- Einarbeiten von hydrophilen Fasern in die mikroporöse Schicht (MPL)
- Einbringen von hydrophilen Fasern an der Grenzschicht MPL/Katalysator
- Einbringen von Fasern an der Grenzschicht Substrat/MPL
- Einbringen von gedruckten Mustern mit mikro-/nanoskaligen, hydrophilen Substanzen

Als hydrophile Fasern werden anorganische Fasern wie Aluminiumoxid- oder Mischfasern aus Al₂O₃-SiO₂ ("Aluminosilikat") eingesetzt. Diese sind geschnitten oder als gemahlene Fasern erhältlich. Als weitere hydrophile Substanzen kommen mikro- oder nanoskalige Partikel auf Basis von SiO₂ (pyrogene Kieselsäuren, fumed silica), TiO₂, Al₂O₃ oder B₂O₃ in Frage.

Die laterale und vertikale Orientierung der hydrophilen Dochte ist dabei wichtig: Im kleinen und mittleren Lastbereich tragen bevorzugt die Bereiche über den Stegen des Flowfields zur Leistung der PEMBZ bei. Dort entstehen bevorzugt die Reaktionsprodukte in Form flüssigen Wassers. Flüssiges Wasser, das über dem Steg gebildet wird, muss quer zum Steg in den Kanal abgeführt werden und ein großräumiges Fluten der GDL vermieden werden. Also muss die Dochtorientierung idealerweise mit der Flowfield-Geometrie korrespondieren. Um dies möglichst universell zu gestalten, wird eine Honigwaben-Struktur vorgeschlagen mit Wabenweite in der Größenordnung der Flowfield-Strukturen, alternativ eignen sich auch ähnliche einfache polygonale Strukturen. Dadurch wird der Abfluss flüssigen Wassers aus der Reaktionszone erleichtert und gleichzeitig Freiraum geschaffen für den notwendigen Gastransport zum Reaktionsort.

Die Transportwege für flüssiges Wasser sind vielgestaltig und in den drei Raumrichtungen notwendig. Es gibt Hinweise, dass sich an der Grenzfläche Katalysator-MPL flüssiges Wasser ansammelt. Dieses flüssige Wasser tritt in Dampfform durch die MPL durch und sammelt sich in flüssiger Form im Substrat wieder an. Dieses Durchschreiten der MPL in Dampfform (Verdampfen und Rekondensieren) sind Zusatzprozesse, die Einbussen an Wirkungsgrad und Kinetik verursachen. Ein Transport flüssigen Wassers durch die MPL hindurch entlang hydrophiler Domänen (in Z-Richtung) verspricht Leistungsvorteile.

## Patentansprüche

1. Brennstottzelle umfassend eine Polymer-Elektrolyt Membran (PEM) ein Flowfield und eine Gasdiffusionsschicht auf Basis von Carbonfasern, die eine strukturierte Hydrophilie besitzt, **dadurch gekennzeichnet, dass** Materialien mit hydrophilen Eigenschaften ausgewählt aus der Gruppe der Metalloxide in einer mittleren Domänengröße von 0,5 bis 80 µm als hydrophile Dochte mit lateraler und vertikaler Orientierung in der Gasdiffusionsschicht vorhanden sind, wobei die hydrophilen Domänen polygonal in der Größenordnung der Flowfield-Strukturen angeordnet sind.

2. Brennstoffzelle nach Anspruch 1, **dadurch gekennzeichnet, dass** die Metalloxide ausgewählt sind aus der Gruppe bestehend aus Si, Al, Ti, B, Sn, Zr.

3. Brennstoffzelle nach Anspruch 1, **dadurch gekennzeichnet, dass** die hydrophilen Domänen durch hydrophobe Domänen beabstandet sind.

4. Brennstoffzelle nach Anspruch 3, **dadurch gekennzeichnet, dass** die hydrophoben Domänen ein fluorhaltiges Polymer oder ein hydrophobes Sol-Gel, vorzugsweise ausgewählt aus der Gruppe bestehend aus PTFE, PVDF enthalten.

5. Brennstoffzelle nach Anspruch 3, **dadurch gekennzeichnet, dass** der Abstand zwischen den hydrophilen Domänen im Bereich von 10 µm bis 3 mm liegt.

6. Brennstoffzelle nach einem oder mehreren der Ansprüche 1 bis 5, **dadurch gekennzeichnet, dass** die hydrophilen Domänen musterförmig vorhanden sind.

7. Brennstoffzelle nach Anspruch 6, **dadurch gekennzeichnet, dass** die hydrophilen Domänen linienförmig angeordnet sind.

8. Brennstoffzelle nach Anspruch 7, **dadurch gekennzeichnet, dass** die hydrophilen Domänen polygonal, vorzugsweise rauten- oder sechseckförmig angeordnet sind.

9. Brennstoffzelle nach einem oder mehreren der Ansprüche 1 bis 8, **dadurch gekennzeichnet, dass** das Flachenverhältnis der hydrophilen Domänen zu den hydrophoben Domänen im Bereich von 10 bis 90 %, vorzugsweise zwischen 40 bis 60 % liegt.

10. Brennstoffzelle nach einem oder mehreren der Ansprüche 1 bis 9, **dadurch gekennzeichnet, dass** die hydrophilen Domänen aus Partikeln oder Fasern bestehen.

## Claims

1. Fuel cell comprising a polymer electrolyte membrane (PEM), a flow field and a gas diffusion layer based on carbon fibres and having structured hydrophilicity, **characterized in that** materials having hydrophilic properties selected from the group of the metal oxides in a mean domain size of 0.5 to 80 µm are present as a hydrophilic wick with lateral and vertical orientation in the gas diffusion layer, the hydrophilic domains being arranged in polygonal form in the order of magnitude of the flow field structures.

2. Fuel cell according to Claim 1, **characterized in that** the metal oxides are selected from the group consisting of Si, Al, Ti, B, Sn, Zr.

3. Fuel cell according to Claim 1, **characterized in that** the hydrophilic domains are spaced apart by hydrophobic domains.

4. Fuel cell according to Claim 3, **characterized in that** the hydrophobic domains comprise a fluorinated polymer or a hydrophobic sol-gel, preferably selected from the group consisting of PTFE, PVDF.

5. Fuel cell according to Claim 3, **characterized in that** the distance between the hydrophilic domains is in the range from 10 µm to 3 mm.

6. Fuel cell according to one or more of Claims 1 to 5, **characterized in that** the hydrophilic domains are in the form of a pattern.

7. Fuel cell according to Claim 6, **characterized in that** the hydrophilic domains are arranged in linear form.

8. Fuel cell according to Claim 7, **characterized in that** the hydrophilic domains are arranged in polygonal form, preferably in rhombic or hexagonal form.

9. Fuel cell according to any of Claims 1 to 8, **characterized in that** the area ratio of the hydrophilic domains to the hydrophobic domains is in the range from 10 to 90%, preferably between 40 and 60%.

10. Fuel cell according to one or more of Claims 1 to 9, **characterized in that** the hydrophilic domains consist of particles or fibres.

## Revendications

1. Pile à combustible, comprenant une membrane électrolytique polymère (MEP), un champ de flux et une couche de diffusion de gaz à base de fibres de carbone, qui présente une hydrophilie structurée, **caractérisée en ce que** des matériaux dotés de propriétés hydrophiles choisis dans le groupe des oxydes métalliques sont présents en une taille moyenne des domaines de 0,5 à 80 µm comme mèche hydrophile présentant une orientation latérale et verticale dans la couche de diffusion de gaz, les domaines hydrophiles étant disposés en polygone avec un ordre de grandeur des structures de champ d'écoulement.

2. Pile à combustible selon la revendication 1, **caractérisée en ce que** les oxydes métalliques sont choisis dans le groupe constitué par Si, Al, Ti, B, Sn, Zr.

3. Pile à combustible selon la revendication 1, **caractérisée en ce que** les domaines hydrophiles sont écartés par des domaines hydrophobes.

4. Pile à combustible selon la revendication 3, **caractérisée en ce que** les domaines hydrophobes contiennent un polymère fluoré ou un sol-gel hydrophobe, de préférence choisi dans le groupe constitué par PTFE, PVDF.

5. Pile à combustible selon la revendication 3, **caractérisée en ce que** la distance entre les domaines hydrophiles se situe dans la plage de 10 µm à 3 mm.

6. Pile à combustible selon l'une ou plusieurs des revendications 1 à 5, **caractérisée en ce que** les domaines hydrophiles sont présents en formant un motif.

7. Pile à combustible selon la revendication 6, **caractérisée en ce que** les domaines hydrophiles sont disposés en forme de lignes.

8. Pile à combustible selon la revendication 7, **caractérisée en ce que** les domaines hydrophiles sont disposés en polygones, de préférence en forme de losange ou d'hexagone.

9. Pile à combustible selon l'une ou plusieurs des revendications 1 à 8, **caractérisée en ce que** le rapport surfacique des domaines hydrophiles aux domaines hydrophobes se situe dans la plage de 10 à 90%, de préférence entre 40 à 60%.

10. Pile à combustible selon l'une ou plusieurs des revendications 1 à 9, **caractérisée en ce que** les domaines hydrophiles sont constitués par des particules ou des fibres.
